(19) Europäisches Patentamt
European Patent Office
Office européen des brevets

(11) **EP 3 833 703 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**30.04.2025   Patentblatt 2025/18**

(45) Hinweis auf die Patenterteilung:
**14.09.2022   Patentblatt 2022/37**

(21) Anmeldenummer: **19746492.8**

(22) Anmeldetag: **02.08.2019**

(51) Internationale Patentklassifikation (IPC):
*C08G 18/48* (2006.01)     *C08G 18/76* (2006.01)
*C08G 18/40* (2006.01)     *C08G 18/42* (2006.01)
*C08G 101/00* (2006.01)     *C08K 5/5313* (2006.01)

(52) Gemeinsame Patentklassifikation (CPC):
(C-Sets verfügbar)
**C08G 18/7664; C08G 18/4018; C08G 18/4202; C08G 18/4216; C08G 18/4238; C08G 18/4833; C08K 5/5313;** C08G 2110/0025     (Forts.)

(86) Internationale Anmeldenummer:
**PCT/EP2019/070896**

(87) Internationale Veröffentlichungsnummer:
**WO 2020/030549 (13.02.2020 Gazette 2020/07)**

(54) **PHOSPHINAT ALS FLAMMSCHUTZADDITIV FÜR PUR-/PIR-HARTSCHAUMSTOFFE**

PHOSPHINATE AS FLAME PROTECTION ADDITIVE FOR PUR/PIR RIGID FOAMS

PHOSPHINATE EN TANT QU'ADDITIF IGNIFUGE POUR MOUSSES DURES PUR / PIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.08.2018   EP 18187910**

(43) Veröffentlichungstag der Anmeldung:
**16.06.2021   Patentblatt 2021/24**

(73) Patentinhaber: **Covestro Intellectual Property GmbH & Co. KG**
**51373 Leverkusen (DE)**

(72) Erfinder:
• **ALBACH, Rolf**
**51061 Köln (DE)**
• **HAGEN, Torsten**
**44265 Dortmund (DE)**
• **HEINEMANN, Torsten**
**42799 Leichlingen (DE)**
• **WELSCH, Nicole**
**51503 Rösrath (DE)**

(74) Vertreter: **Levpat**
**c/o Covestro AG**
**Gebäude 4825**
**51365 Leverkusen (DE)**

(56) Entgegenhaltungen:
WO-A1-2017/089293     CN-A- 104 194 319
CN-B- 105 330 818     US-A1- 2015 105 484

• **LORENZETTI A ET AL: "Influence of phosphorus valency on thermal behaviour of flame retarded polyurethane foams", POLYMER DEGRADATION AND STABILITY, BARKING, GB, vol. 96, no. 8, 11 May 2011 (2011-05-11), pages 1455 - 1461, XP028231160, ISSN: 0141-3910, [retrieved on 20110519], DOI: 10.1016/ J.POLYMDEGRADSTAB.2011.05.012**

Bemerkungen:
Die Akte enthält technische Angaben, die nach dem Eingang der Anmeldung eingereicht wurden und die nicht in dieser Patentschrift enthalten sind.

EP 3 833 703 B2

(52) Gemeinsame Patentklassifikation (CPC): (Forts.)

C-Sets
**C08K 5/5313, C08L 75/06**

**Beschreibung**

Die vorliegende Erfindung betrifft flammgeschützte Polyurethan-/Polyisocyanurat-Hartschaumstoffe (im Folgenden auch als "PUR-/PIR-Hartschaumstoffe" bezeichnet) mit Phosphinaten, sowie Verfahren zu ihrer Herstellung und die Verwendung von Phosphinaten als Flammschutzmittel in System zur Herstellung von PUR-/PIR-Hartschaumstoffen.

So wie alle organischen Polymere sind auch PUR-/PIR-Hartschaumstoffe brennbar, wobei die große Oberfläche pro Masseneinheit in Schaumstoffen dieses Verhalten noch verstärkt. PUR-/PIR-Hartschaumstoffe werden häufig als Isolationsmaterialien eingesetzt, beispielsweise als Dämmstoff in der Bauindustrie. In vielen Einsatzgebieten von PUR-/PIR-Hartschaumstoffen ist daher eine Brandschutzausrüstung durch zugesetzte Flammschutzmittel erforderlich. Es gibt dabei Flammschutzmittel, die die Flamme in der Gasphase ersticken und es gibt Flammschutzmittel, die die Oberfläche des polymeren Werkstoffes schützen, indem sie die Verkohlung fördern oder einen glasartigen Überzug bilden. Als Flammschutzmittel werden halogenhaltige Verbindungen sowie Stickstoff- und Phosphorverbindungen bevorzugt eingesetzt. Verbindungen, die Halogene enthalten, und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen, verkohlten Oberfläche führen. Diese Intumeszenzschicht schützt das Material vor weiterer Verbrennung ( G.W. Becker, D. Braun: Polyurethane. In: G. Oertel (Ed.), Kunststoff Handbuch, München, Carl Hanser Verlag, 1983, 2, 104-1-5 ).

Ein Nachteil insbesondere der halogenhaltigen Vertreter dieser Klassen ist allerdings, dass sie giftig und relativ flüchtig sind und so aus dem Schaum migrieren können ( J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258 ) und bei der Verwendung im Verbrennungsprozess korrosive Halogenwasserstoffsäure entsteht.

Aufgrund der zunehmenden Verbreitung von organischen Halogenverbindungen mit teilweise gesundheitsschädlicher Wirkung in der Umwelt richtet sich das Interesse auf halogenfreie Alternativen, z.B. auf halogenfreie Phosphatester und Phosphitester ( S.V. Levchik, E.D. Weil: A Review of Recent Progress in Phosphorus-based Flame Retardants, J. Fire Sci., 2006, 24, 345-364 ) und auf roten Phosphor.

Am weitesten verbreitet sind PUR- und PIR-Schaumstoffe, die mit organischen Phosphaten wie Tris(2-chlorisopropyl)phosphat (TCPP) und Triethylphosphat (TEP) flammwidrig eingestellt sind. Auch organische Phosphonsäureester wie Dimethylpropanphosphonat (DMPP, DE 44 18 307 A1 ) oder Diethylethylphosphonat (DEEP, US 5,268,393 ) und andere ( WO 2006/108833 A1 und EP 1 142 940 A2 ) sind als halogenfreie Flammschutzmittel für Hartschaumstoffe auf Isocyanatbasis beschrieben. Festes Ammoniumpolyphosphat wurde ebenfalls bereits als Flammschutzmittel eingesetzt ( US 2014/066532 A1 und US 5,470,891 ).

Aber auch diese halogenfreien Alternativen haben Nachteile: Teilweise sind sie empfindlich gegenüber Hydrolyse unter den für PUR-/PIR-Schaumstoffsysteme typischen alkalischen Bedingungen, oder die Wirksamkeit ist nicht zufriedenstellend. Roter Phosphor weist Nachteile auf, z.B. im Hinblick auf schnelle Absorption von Feuchtigkeit und schnelle Oxidation, was zu einem Verlust des Flammschutzes und ggf. zur Bildung giftiger Phosphine führt, und neigt außerdem zu Pulverexplosionen. Oft wird roter Phosphor mikroverkapselt um diese Probleme zu beseitigen. ( L. Chen, Y.-Z. Wang: A review on flame retardant technology in China. Part 1: development of flame retardants, Polym. Adv. Technol., 2010, 21, 1-26 ).

Salze der Hypophosphonsäure und von Dialkylhypophosphonäuren sind als Flammschutzmittel für Polyurethanwerkstoffe bereits beschrieben. Dazu gehört der Einsatz in Lacken ( CN 105505171 A ), Kabelisolierungen ( CN 105131578 A ), thermoplastischen Polyurethanen ( H. Li, N. Ning, L. Zhang, Y. Wang, W. Liang, M. Tian: Different flame retardancy effects and mechanisms of aluminium phosphinate in PPO, TPU and PP, Polym. Degrad. Stab., 2014, 105, 86-95 ) und auch Schaumstoffen.

So stellt EP 0 069 975 A1 fest, dass Phosphinate alleine nicht als Flammschutzmittel für Polyurethanschaumstoffe geeignet seien, aber eine synergistische Wirkung mit halogenhaltigen Verbindungen aufweisen.

CN 105 330 818 B offenbart in den Beispielen Formulierungen zur Herstellung von Polyurethanschaumstoffen unter Verwendung eines Flammschutzmittelgemisches enthaltend ein Aluminiumphosphinat. Der Anteil des Aluminiumphosphinats in den Beispielen liegt jedoch außerhalb beanspruchten Bereiches.

Die Aufgabe der vorliegenden Erfindung ist es, die Herstellung von PUR-/PIR-Hartschaumstoffen mit halogenfreien Flammschutzmitteln zu ermöglichen, wobei die PUR-/PIR-Hartschaumstoffe einen verbesserten Flammschutz aufweisen.

Diese Aufgabe konnte gelöst werden durch den erfindungsgemäßen Einsatz von Phosphinaten gemäß der Formel (I) als Flammschutzmittel in der Herstellung von PUR-/PIR-Hartschaumstoffen. Gegenstand der Erfindung ist ein Verfahren zur Herstellung von PUR-/PIR-Hartschaumstoffen durch die Umsetzung eines Reaktionsgemisches enthaltend

- **A1** eine Isocyanat-reaktive Komponente
- **A2** Treibmittel
- **A3** Katalysator
- **A4** gegebenenfalls Additiv
- **A5** Flammschutzmittel
- **B** eine Isocyanatkomponente,

dadurch gekennzeichnet, dass das Flammschutzmittel **A5** ein Phosphinat gemäß der Formel (I) enthält

$$M[(R)_2PO_2]_n \qquad (I),$$

wobei

- R = jeweils für H, C1- bis C4-(Hydroxy-)Alkyl-Gruppe oder Benzyl-Gruppe steht,
- M = ein Element der Hauptgruppen 1 bis 3 ist, wobei Wasserstoff ausgenommen ist, und
- n = die Nummer der Hauptgruppe von M ist,

und
der Anteil des Phosphinats gemäß der Formel (I) 0,1 bis 15 Gew.-% beträgt, bezogen auf die Gesamtmasse der Komponenten **A1** bis **A5**
und

dass keine halogenierten Kohlenwasserstoffe als Treibmittel eingesetzt werden, und
dass das Flammschutzmittel A5 kein halogenhaltiges Flammschutzmittel enthält, und
dass das Verhältnis von NCO-Gruppen und der gegenüber Isocyanaten reaktiven Gruppen in der Reaktionsmischung eine Kennzahl (Index) von 250 bis 450 aufweist.

Überraschenderweise wurde gefunden, dass nicht nur die Brandschutzeigenschaften der erfindungsgemäßen PUR-/PIR-Hartschaumstoffe enthaltend Phosphinat gemäß der Formel (I) als Flammschutzmittel verbessert werden, sondern in einer besonderen Ausführungsform auch die Druckfestigkeit und Anisotropie der PUR-/PIR-Hartschaumstoffe verbessert wird.

Als Isocyanat-reaktive Komponente **A1** wird mindestens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die Isocyanat-reaktive Komponente **A1** kann bevorzugt eine Hydroxylzahl zwischen 25 bis 800 mg KOH/g, insbesondere 50 bis 500 mg KOH/g und besonders bevorzugt 100 bis 300 mg KOH/g aufweisen. Vorzugsweise weist die einzelne Polyolkomponente ein zahlenmittleres Molekulargewicht von 120 g/mol bis 6000 g/mol, insbesondere 400 g/mol bis 2000 g/mol und besonders bevorzugt 500 g/mol bis 1000 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1 , [0024]-[0041], beschrieben. Beispiele zu Polycarbonatpolyolen und ihre Herstellung finden sich unter anderem in der EP 1 359 177 A1 . Die Herstellung geeigneter Polyetheresterpolyole ist unter anderem in der WO 2010/043624 A und in der EP 1 923 417 A beschrieben.

Weiterhin können in der Isocyanat-reaktiven Komponente **A1** niedermolekulare Isocyanatreaktive Verbindungen enthalten sein, insbesondere können di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol und Glycerin.

Neben den oben beschriebenen Polyolen und Isocyanat-reaktiven Verbindungen können in der Komponente **A1** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente **A1** kann aus einer oder mehreren der oben genannten Isocyanat-reaktiven Komponenten bestehen.

Als Treibmittel **A2** kann physikalisches Treibmittel eingesetzt werden, wie beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **A2** kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Als Treibmittel **A2** wird mindestens eine Verbindung, ausgewählt aus der Gruppe bestehend aus physikalischen und chemischen Treibmittel, eingesetzt. Bevorzugt wird nur physikalisches Treibmittel eingesetzt.

Als Katalysator **A3** zur Herstellung der PUR-/PIR-Hartschaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A1** vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **A3** kommen ferner in Betracht: Amidine, wie z. B. 2,3-Dimethyl-3,4,5,6-tetrahydropyrimidin, Tetraalkylammoniumhydroxide, wie z. B. Tetramethylammoniumhydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Additive als Komponente **A4** eingesetzt werden. Beispiele für die Komponente **A4** sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure, Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Hornblenden, Amphibole, Chrisotil, Montmorillonit und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Erfindungsgemäß enthält das Flammschutzmittel **A5** ein Phosphinat gemäß der Formel (I)

$$M[(R)_2 PO_2]_n \qquad (I),$$

wobei

- R =

  - jeweils für H, C1- bis C4-(Hydroxy-)Alkyl-Gruppe oder Benzyl-Gruppe steht,

- M =

  - ein Element der Hauptgruppen 1 bis 3 ist, wobei Wasserstoffausgenommen ist, und

- n =

  - die Nummer der Hauptgruppe von M ist,

und
der Anteil des Phosphinats gemäß der Formel (I) 0,1 bis 15 Gew.-% beträgt, bezogen auf die Gesamtmasse der Komponenten **A1** bis **A5.**

Das Phosphinat gemäß Formel (I) kann in der Reaktionsmischung als Feststoff oder als wässrige oder glycolische Lösung, bevorzugt als wässrige Lösung eingesetzt werden. Das Phosphinat gemäß Formel (I) kann dabei mit einem Partikeldurchmesser d50 von weniger als 50,0 $\mu$m, bevorzugt weniger als 25,0 $\mu$m, besonders bevorzugt weniger als 10,0 $\mu$m und ganz besonders bevorzugt weniger als 5,0 $\mu$m eingesetzt werden. Der Partikeldurchmesser d50 steht für den Partikeldurchmesser den 50% der enthaltenen Partikel unterschreiten. Wenn das Phosphinat gemäß Formel (I) als Lösung eingesetzt wird, enthält die Lösung bevorzugt mindestens 10 Gew.-%, besonders bevorzugt 10 bis 60 Gew.-%, insbesondere bevorzugt 15 bis 40 Gew.-% des Phosphinats gemäß Formel (I).

Die Gruppe R des Phosphinats gemäß der Formel (I) steht jeweils für Wasserstoff, C1- bis C4-(Hydroxy-)Alkyl-Gruppe oder Benzyl-Gruppe. Bevorzugt steht R jeweils für Wasserstoff oder C1- bis C4-(Hydroxy-)Alkylgruppe, besonders bevorzugt für Wasserstoff oder C2- bis C4-(Hydroxy-)Alkylgruppe. Beispiele für eine C1- bis C4-(Hydroxy-)Alkyl-Gruppe sind Methyl, Ethyl, Propyl, Butyl, 2-Methylpropyl, Methoxy, Ethoxy oder Propoxy, wobei Ethyl bevorzugt ist.

Das Hauptgruppenelement M des Phosphinats gemäß der Formel (I) ist ein Element der Hauptgruppen 1 bis 3, bevorzugt 1 und 2. Das Hauptgruppenelement M des Phosphinats gemäß der Formel (I) kann beispielsweise Natrium, Kalium, Magnesium, Calcium oder Aluminium, bevorzugt Natrium, Magnesium oder Aluminium, besonders bevorzugt Natrium und Aluminium, insbesondere bevorzugt Natrium sein.

Das Phosphinat gemäß der Formel (I) kann allein oder als Mischung eingesetzt werden. Der Anteil des Phosphinats gemäß der Formel (I) am Flammschutzmittel **A5** kann z.B. 1,0 Gew.-% bis 50,0 Gew.-%, bevorzugt 5,0 Gew.-% bis 40,0 Gew.-% und besonders bevorzugt 10,0 Gew.-% bis 30,0 Gew.-% betragen, jeweils bezogen auf die Gesamtmasse des Flammschutzmittels **A5.** Der Anteil an Phosphinat gemäß der Formel (I) kann bevorzugt 0,5 Gew.-% bis 15,0 Gew.-%, besonders bevorzugt 1,0 Gew.-% bis 10,0 Gew.-%, jeweils bezogen auf die Gesamtmasse der Komponenten **A1** bis **A5,** betragen.

Das Phosphinat gemäß Formel (I) kann einzeln oder als Gemisch eingesetzt werden.

Zusätzlich zum Phosphinat gemäß der Formel (I) können weitere Flammschutzmittel wie beispielsweise Phosphate oder Phosphonate, wie z. B. Diethylethylphosphonat (DEEP), Triethylphosphat (TEP), Triphenylphosphat (TPP), Trikresylphosphat, Diphenylkresylphosphat (DPK), Dimethylmethylphosphonat (DMMP), Diethanolaminomethylphosphonsäurediethylester, 9,10-Dihydro-9-oxa-10-phosphorylphenanthrene-10-oxid (DOPO) und Dimethylpropylphosphonat (DMPP), eingesetzt werden. Bevorzugt sind Diphenylkresylphosphat, Triethylphosphat und Bisphenol-A-bis(Diphenylphosphat). Es wird kein halogenhaltiges Flammschutzmittel eingesetzt.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanatoprop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Im Reaktionsgemisch führt die Anzahl der NCO-Gruppen im Isocyanat und die Anzahl der gegenüber Isocyanaten reaktiven Gruppen zu einer Kennzahl (Index) zwischen 250 und 450. Diese Kennzahl liegt bevorzugt in einem Bereich von 300 bis 400 in dem ein hoher Anteil an Polyisocyanuraten (PIR) vorliegt (der Hartschaum wird als PIR-Schaum oder PUR-/PIR-Schaum bezeichnet) und zu einer höheren Flammwidrigkeit des PUR-/PIR-Schaums selbst führt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

Die Erfindung betrifft ebenfalls einen PUR-/PIR-Hartschaum der durch das erfindungsgemäße Verfahren hergestellt ist.

Die Herstellung der erfindungsgemäßen PUR-/PIR-Hartschaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565 , in G.Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR-/PIR-Hartschaumstoffe finden bevorzugt zur Herstellung von Verbundelementen Verwendung. Üblicherweise findet hier die Verschäumung in kontinuierlicher oder diskontinuierlicher Weise gegen min destens eine Deckschicht statt.

Ein weiterer Gegenstand der Erfindung ist demzufolge die Verwendung eines erfindungsgemäßen PUR-/PIR-Hartschaumstoffes als Isolationsschaumstoff und/oder als Haftvermittler in Verbundelementen, wobei die Verbundelemente eine einen erfindungsgemäßen PUR-/PIR-Hartschaumstoff umfassende Schicht und eine Deckschicht umfassen. Die Deckschicht wird hierbei zumindest teilweise von einer den erfindungsgemäßen PUR-/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

In einer ersten Ausführungsform betrifft die Erfindung ein Verfahren zur Herstellung von PUR-/PIR-Hartschaumstoffen durch die Umsetzung eines Reaktionsgemisches enthaltend

- **A1**

  - eine Isocyanat-reaktive Komponente

- **A2**

  - Treibmittel

- **A3**

  - Katalysator

- **A4**

  - gegebenenfalls Additiv

- **A5**

  - Flammschutzmittel **B** eine Isocyanatkomponente,

dadurch gekennzeichnet, dass das Flammschutzmittel **A5** ein Phosphinat gemäß der Formel (I) enthält

$$M[(R)_2 PO_2]_n \qquad (I),$$

wobei

- R =

  - jeweils für H, C1- bis C4-(Hydroxy-)Alkyl-Gruppe oder Benzyl-Gruppe steht,

- M =

  - ein Element der Hauptgruppen 1 bis 3 ist, wobei Wasserstoff ausgenommen ist, und

- n =

  - die Nummer der Hauptgruppe von M ist,

und

  der Anteil des Phosphinats gemäß der Formel (I) 0,1 bis 15 Gew.-% beträgt, bezogen auf die Gesamtmasse der Komponenten **A1** bis **A5**
  und
  dass keine halogenierten Kohlenwasserstoffe als Treibmittel eingesetzt werden, und
  dass das Flammschutzmittel A5 kein halogenhaltiges Flammschutzmittel enthält, und
  dass das Verhältnis von NCO-Gruppen und der gegenüber Isocyanaten reaktiven Gruppen in der Reaktionsmischung eine Kennzahl (Index) von 250 bis 450 aufweist.

In einer zweiten Ausführungsform betrifft die Erfindung ein Verfahren nach der ersten Ausführungsform, dadurch gekennzeichnet, dass in der Isocyanat-reaktiven Komponente **A1** ein Polyesterpolyol enthalten ist.

In einer dritten Ausführungsform betrifft die Erfindung ein Verfahren nach einer der Ausführungsformen 1 oder 2, dadurch gekennzeichnet, dass in der Isocyanat-reaktiven Komponente **A1** ein Polyesterpolyol mit einem Äquivalentgewicht von 50 g/mol bis 2000 g/mol, bevorzugt 100 g/mol bis 1000 g/mol, besonders bevorzugt 200 g/mol bis 500 g/mol und ganz besonders bevorzugt 300 g/mol bis 450 g/mol enthalten ist.

In einer vierten Ausführungsform betrifft die Erfindung ein Verfahren nach einer der Ausführungsformen 1 bis 3, dadurch gekennzeichnet, dass das Flammschutzmittel **A5** 1,0 Gew.-% bis 50,0 Gew.-%, bevorzugt 5,0 Gew.-% bis 40,0 Gew.-%, besonders bevorzugt 10,0 Gew.-% bis 30 Gew.-%, jeweils bezogen auf die Gesamtmasse des Flammschutzmittels **A5,** eines Phosphinats gemäß der Formel (I) enthält.

In einer fünften Ausführungsform betrifft die Erfindung ein Verfahren nach einer der Ausführungsformen 1 bis 4, dadurch gekennzeichnet, dass der Anteil an Phosphinat gemäß der Formel (I) 0,5 Gew.-% bis 15,0 Gew.-%, besonders bevorzugt 1,0 Gew.-% bis 10,0 Gew.-%, jeweils bezogen auf die Gesamtmasse der Komponenten **A1** bis **A5,** beträgt.

In einer sechsten Ausführungsform betrifft die Erfindung ein Verfahren nach einer der Ausführungsformen 1 bis 5, dadurch gekennzeichnet, dass das Flammschutzmittel **A5** ein Phosphinat gemäß der Formel (I) enthält, wobei M ein Element aus der Hauptgruppe 1 oder 2 ist.

In einer siebten Ausführungsform betrifft die Erfindung ein Verfahren nach einer der Ausführungsformen 1 bis 5, dadurch gekennzeichnet, dass das Flammschutzmittel **A5** ein Phosphinat gemäß der Formel (I) enthält, wobei M ausgewählt ist aus der Gruppe bestehend aus Natrium, Kalium, Magnesium, Calcium und Aluminium, bevorzugt Natrium, Magnesium und Aluminium, besonders bevorzugt Natrium und Aluminium.

In einer achten Ausführungsform betrifft die Erfindung ein Verfahren nach einer der Ausführungsformen 1 bis 7, dadurch gekennzeichnet, dass das Flammschutzmittel **A5** neben einem Phosphinat gemäß der Formel (I) ein Flammschutzmittel enthält welches ausgewählt ist aus der Gruppe bestehend aus Diphenylkresylphosphat, Triethylphosphat und Bisphenol-A-bis-(Diphenylphosphat).

In einer neunten Ausführungsform betrifft die Erfindung ein Verfahren nach einer der Ausführungsformen 1 bis 8, dadurch gekennzeichnet, dass ein Phosphinat gemäß der Formel (I) enthaltend ist, wobei R ausgewählt ist aus der Gruppe bestehend aus Wasserstoff oder C1-C4-Alkylgruppe.

In einer zehnten Ausführungsform betrifft die Erfindung ein Verfahren nach einer der Ausführungsformen 1 bis 9, dadurch gekennzeichnet, dass das Flammschutzmittel **A5** ein Phosphinat gemäß der Formel (I) mit einem Partikeldurchmesser d50 von weniger als 50,0 $\mu$m, bevorzugt weniger als 25,0 $\mu$m, besonders bevorzugt weniger als 10,0 $\mu$m und ganz besonders bevorzugt weniger als 5,0 $\mu$m enthält.

In einer elften Ausführungsform betrifft die Erfindung ein Verfahren nach einer der Ausführungsformen 1 bis 10, dadurch gekennzeichnet, dass die Isocyanatkomponente **B** ausgewählt ist aus mindestens einer Verbindung aus der Gruppe bestehend aus MDI, polymeres MDI und TDI.

In einer zwölften Ausführungsform betrifft die Erfindung einen PUR-/PIR-Hartschaumstoff, erhältlich nach dem Verfahren gemäß einer der Ausführungsformen 1 bis 11.

In einer dreizehnten Ausführungsform betrifft die Erfindung die Verwendung von PUR-/PIR-Hartschaumstoffen nach der zwölften Ausführungsform zur Herstellung eines Isolationsmaterials.

In einer vierzehnten Ausführungsform betrifft die Erfindung ein Verfahren nach der ersten Ausführungsform, dadurch gekennzeichnet, dass das Flammschutzmittel **A5** ein Phosphinat gemäß der Formel (I) und ein weiteres Flammschutzmittel enthält.

In einer fünfzehnten Ausführungsform betrifft die Erfindung ein Verfahren nach der ersten Ausführungsform, dadurch gekennzeichnet, dass das Reaktionsgemisch enthält

- **A1**

  - ein Polyesterpolyol mit einem zahlenmittleren Molekulargewicht von 50 g/mol bis 2500 g/mol und einer Hydroxylzahl von 50 mg KOH/g bis 400 mg KOH/g,

- **A2**

  - Treibmittel, enthaltend eine Verbindung ausgewählt aus der Gruppe bestehend aus halogenfreien chemischen Treibmitteln und halogenfreien physikalischen Treibmitteln,

- **A3**

  - Katalysator, enthaltend Alkalicarboxylat,

- **A4**

  - Additiv, enthaltend einen Schaumstabilisator

- **A5**

  - Flammschutzmittel, enthaltend ein Phosphinat gemäß der Formel (I), wobei

        R = für H und/oder C1- bis C4-(Hydroxy)Alkyl-Gruppe,
        M = für Natrium, Magnesium oder Aluminium, und
        n = die Nummer der Hauptgruppe von M ist.

- **B**

  - monomeres und polymeres MDI.

In einer sechzehnten Ausführungsform betrifft die Erfindung ein Verfahren nach der ersten Ausführungsform, dadurch gekennzeichnet, dass das Reaktionsgemisch enthält

- **A1**

  - 50 Gew.-% bis < 90 Gew.-% eines oder mehrerer Polyesterpolyole und 5 Gew.-% bis 20 Gew.-% eines oder mehrerer Polyetherpolyole, jeweils bezogen auf das Gesamtgewicht der Komponente **A1** ,

- **A2**

  - physikalische Treibmittel,

- **A3**

  - Katalysator,

- **A4**

  - gegebenenfalls Additiv,

- **A5**

  - Flammschutzmittel, enthaltend ein Phosphinat gemäß der Formel (I) und mindestens eine Verbindung ausgewählt aus der Gruppe bestehend aus Diphenylkresylphosphat, Triethylphosphat und Bisphenol-A-bis-(Diphenylphosphat),

- **B**

  - polymeres Isocyanat.

In einer siebzehnten Ausführungsform betrifft die Erfindung ein Verfahren nach einer der Ausführungsformen 1 bis 12, dadurch gekennzeichnet, dass das Phosphinat gemäß der Formel (I) als Feststoff oder als wässrige oder glycolische Lösung eingesetzt wird.

In einer achtzehnten Ausführungsform betrifft die Erfindung ein Verfahren nach einer der Ausführungsformen 1 bis 12, dadurch gekennzeichnet, dass das Treibmittel A2 ausgewählt ist aus einem oder mehreren Verbindungen der Gruppe bestehend aus halogenfreien chemischen Treibmitteln und halogenfreien physikalischen Treibmitteln.

Die bevorzugten Ausführungsformen können einzeln oder auch miteinander verknüpft ausgeführt werden.

Beispiele

A1-1    Polyesterpolyol aus Terephthalsäure, Adipinsäure, Ethylenglykol und Diethylenglykol mit einem Äquivalentgewicht von 384 g/mol

A1-2    Polyesterpolyol aus Phthalsäureanhydrid, Adipinsäure, Ethylenglykol und Diethylenglykol mit einem Äquivalentgewicht von 267 g/mol

A1-3   Polyesterpolyol aus Adipinsäure, Ethylenglykol und Diethylenglykol mit einem Äquivalentgewicht von 1000 g/mol

A1-4   Umsetzungsprodukt aus Trimethylolpropan mit 9,3 Äquivalenten Ethylenoxid mit einem Äquivalentgewicht von 225 g/mol

A1-5   Polyesterpolyol aus Phthalsäureanhydrid und Diethylenglykol mit einem Äquivalentgewicht von 240 g/mol

A1-6   Zuckerester DUB SE 11S (Fa. Oleochem)

A1-7   Polyglycerin-Polyricinoleat (Paalsgard® PGPR 4150, Fa. Oleochem)

A2-1   n-Pentan

A2-2   Wasser

A3-1   46 Gew.-%ige Lösung einer Mischung (2,2:1 mol/mol) aus Kaliumacetat und Phthalsäure-1,2-bis[2-(2-hydroxyethoxy)ethyl]ester in Diethylenglycol

A3-2   Gemisch aus 80 Gew.-% Kalium-2-ethylhexanoat, 13 Gew.-% Kaliumacetat und 7 Gew.-% Pentamethyldiethylentriamin

A4-1   Polyether-modifiziertes Silicon (Tegostab® B8443, Fa. Evonik)

A5-1   Triethylphosphat (Levagard® TEP, Fa. Lanxess)

A5-2   Bisphenol A-bis(diphenyl phosphat) (Fyroflex® BDP, Fa. ICL Industrial Products)

A5-3   Diphenylkresylphosphat

A5-4   $Al[(C_2H_5)_2PO_2]_3$ mit einer Partikelgröße $d^{50} = 20\ \mu m$ Exolit® OP 1230, Fa. Clariant)

A5-5   $Al(C_2H_5)_2PO_2]_3$ mit einer Partikelgröße $d^{50} = 4\ \mu m$ (Exolit® OP 935, Fa. Clariant)

A5-6   $Na[H_2PO_2]$ (Fa. Sigma-Aldrich)

A5-7   Aluminiumhydroxid (Martinal® OL-104C, Fa. Martinswerk GmbH)

A5-8   Magnesiumhydroxid (Vertex® 100, Fa. J.M. Huber Corporation)

A5-9   Ammoniumpolyphosphat Exolit® AP422 (Fa. Clariant)

A5-10  Sepiolit Adins Clay NC (Fa. Tolsa)

A5-11  Sepiolit Adins Clay 20 (Fa. Tolsa)

A5-12  Tris(2-chlorisopropyl)phosphat

B-1    Polymeres MDI mit einer Viskosität von 0,7 Pas (bei 25°C) und einem NCO-Gehalt von 31,5 Gew.-%

**Herstellung und Prüfung der PUR-/PIR-Hartschaumstoffe**

Die Flammenausbreitung der PUR-/PIR-Hartschaumstoffe wurde durch Kantenbeflammung mit dem Kleinbrennertest gemäß DIN 4102-1 (Mai 1998) an einer 18 cm x 9 cm x 2 cm großen Probe gemessen.
Die Messung des MARHE-Werts (Maximum Average Rate of Heat Emission) wurde nach der ISO-Norm 5660-1 (März 2015) mit einem "Cone Calorimeter" gemessen. Die Probenkörper von 1 dm x 1 dm x 0,3 dm werden dabei 20 min lang durch einen Wärmestrahler mit einer Bestrahlungsstärke von 50 kW/m$^2$ bestrahlt. Der ermittelte MARHE-Wert gibt den Maximalwert der über die Versuchszeit gemittelten Wärmefreisetzungsrate an.

Die Druckfestigkeit der PUR-/PIR-Hartschaumstoffe wurde nach DIN EN 826 (Mai 2013) an Probenkörpern mit den Maßen 50 mm x 50 mm x 50 mm durchgeführt. Es wurde dabei die Druckfestigkeit der Probenkörper in Aufschäumrichtung und quer zur Aufschäumrichtung gemessen.

Die Messung der Rohdichte wurde nach der DIN EN ISO 845 (Oktober 2009) durchgeführt.

Auf Basis der Polyolkomponenten wurden im Labor PUR-/PIR-Hartschaumstoffe durch die Vermischung von 0,3 dm$^3$ eines Reaktionsgemisches in einem Pappbecher hergestellt. Dazu wurden der jeweiligen Polyolkomponente das Flammschutzmittel, der Schaumstabilisator, Katalysatoren und n-Pentan als Treibmittel zugesetzt und kurz gerührt. Die erhaltene Mischung wurde mit dem Isocyanat vermischt und das Reaktionsgemisch in eine Papierform (3 x 3 x 1 dm$^3$) gegossen und darin ausreagiert. Die genauen Rezepturen der einzelnen Versuche sind in den Tabellen 1 und 2 wiedergegeben, ebenfalls die Ergebnisse der physikalischen Messungen an den erhaltenen Proben.

**Tabelle 1**

| Beispiele | | 1* | 2 | 3 | 4 | 5 | 6* | 7* |
|---|---|---|---|---|---|---|---|---|
| A1-1 | Gew.-Tle | 64 | 64 | 64 | 64 | 64 | | |
| A1-2 | Gew.-Tle | | | | | | 41 | 41 |
| A1-3 | Gew.-Tle | | | | | | 14,9 | 14,9 |
| A1-4 | Gew.-Tle | | | | | | 6,4 | 6,4 |
| A2-1 | Gew.-Tle | 15 | 15 | 15 | 15 | 15 | 16 | 16 |
| A2-2 | Gew.-Tle | | | | | | 1 | 1 |
| A3-1 | Gew.-Tle | 7 | 7 | 7 | 7 | 7 | 12,4 | 12,4 |
| A4-1 | Gew.-Tle | 4 | 4 | 4 | 4 | 4 | 5 | 5 |
| A5-1 | Gew.-Tle | 12,5 | 10 | 10 | 10 | 10 | | |
| A5-2 | Gew.-Tle | 12,5 | 10 | 10 | 10 | 10 | | |
| A5-3 | Gew.-Tle | | | | | | 19,2 | 19,2 |
| A5-4 | Gew.-Tle | | 5 | | | | 30 | |
| A5-5 | Gew.-Tle | | | 5 | 12 | | | |
| A5-6 | Gew.-Tle | | | | | | 12 | |
| A5-7 | Gew.-Tle | | | | | | | 30 |
| B-1 | Gew.-Tle | 126 | 126 | 126 | 126 | 126 | 174,9 | 174,9 |
| Kennzahl | | 320 | 320 | 320 | 320 | 320 | 320 | 320 |
| **Eigenschaften** | | | | | | | | |
| Rohdichte aus dem Kern des Formteils | kg/m$^3$ | 32 | 33 | 33 | 35 | 33 | 34 | 33 |
| Druckfestigkeit in der schwächsten Richtung | MPa | 0,08 | 0,10 | 0,13 | 0,10 | 0,11 | 0,08 | 0,05 |
| Anisotropie | | 2,9 | 2,3 | 1,3 | 2,0 | 1,9 | 1,9 | 2,4 |
| Liegezeit | s | 10 | 10 | 8 | 8 | 12 | 22 | 25 |
| Abbindezeit | s | 50 | 70 | 80 | 40 | 100 | 130 | 130 |
| Steigzeit | s | 50 | 55 | 50 | 40 | 100 | 100 | 100 |
| Vertikale Flammenausbreitung | cm | 12 | 11 | 11 | 9 | 11 | 16 | 17 |
| * Vergleichsbeispiel | | | | | | | | |

Die Tabelle 1 zeigt den Einsatz von Phosphinat gemäß Formel (I) als Bestandteil eines Flammschutzmittelgemisches im Vergleich gegenüber Flammschutzmittelgemischen welche repräsentativ für den Stand der Technik sind. Die PUR-/PIR-Hartschaumstoffe der Beispiele 2 bis 5 zeigen eine geringere Flammenausbreitung als der PUR-/PIR-Hartschaumstoff von Vergleichsbeispiel 1 und zusätzlich eine Verbesserung der Druckfestigkeit und Anisotropie, wobei insbesondere das Beispiel 3 eine deutliche Verbesserung der Anisotropie aufweist. Auch im Vergleich mit einem Flammschutzmittelgemisch enthaltend einen Feststoff als Flammschutzmittel (Vergleichsbeispiel 7) weist das Beispiel 6, enthaltend ein Phosphinat gemäß Formel (I), eine geringere Flammenausbreitung, Anisotropie und eine verbesserte Druckfestigkeit auf. Die Beispiele 2 bis 5 im Vergleich zu Beispiel 6 zeigen weiterhin, dass der Einsatz einer erfindungsgemäßen Menge des Phosphinats gemäß Formel (I) zu einem verbesserten Flammschutz und Druckfestigkeit führt.

Tabelle 2 zeigt die Verwendung von Phosphinaten gemäß Formel (I) als alleiniges Flammschutzmittel in der Herstellung von PUR-/PIR-Hartschaumstoffen im Vergleich mit einem als Feststoff eingesetztem Flammschutzmittel. Der PUR-/PIR-Hartschaumstoff des Beispiels 8 zeigt durch einen niedrigeren MARHE-Wert einen verbesserten Flammschutz als das Vergleichsbeispiel 9.

**Tabelle 2**

| Beispiele | | 8 | 9* |
|---|---|---|---|
| A1-5 | Gew.-Tle | 100 | 100 |
| A2-1 | Gew.-Tle | 20,3 | 20,3 |
| A3-2 | Gew.-Tle | 6,8 | 6,8 |
| A4-1 | Gew.-Tle | 2,5 | 2,5 |
| A5-4 | Gew.-Tle | 10 | |
| A5-8 | Gew.-Tle | | 10 |
| B-1 | Gew.-Tle | 126,7 | 126,7 |
| Kennzahl | | 250 | 250 |
| **Eigenschaften** | | | |
| Rohdichte aus dem Kern des Formteils | $Kg/m^3$ | 29,0 | 30,8 |
| MARHE | $kW/m^2$ | 173 | 216 |
| Wärmefreisetzung (Spitze)[1] | $kW/m^2$ | 204 | 260 |
| * Vergleichsbeispiel [1] Bei der Messung der Wärmefreisetzung über 600 Sekunden nach der ISO-Norm 5660-1 (März 2015) höchste gemessene Wert der Wärmefreisetzung. | | | |

Tabelle 2 zeigt den Vergleich eines PUR-/PIR-Hartschaumstoffes mit einem Phosphinat gemäß Formel (I) als alleiniges Flammschutzmittel (Beispiel 8) mit einem PUR-/PIR-Hartschaumstoffes enthaltend ein nicht-erfindungsgemäßes Flammschutzmittel als Feststoff (Beispiel 9). Sowohl der MARHE-Wert als auch die Spitze der Wärmefreisetzung sind beim Einsatz des erfindungsgemäßen Flammschutzmittels deutlich geringer (Beispiel 8) als beim nicht-erfindungsgemäßen Flammschutzmittel (Beispiel 9).

**Tabelle 3:**

| Beispiele | | 10 | 11 | 12 |
|---|---|---|---|---|
| A1-2 | Gew.-Teile | 32,1 | 32,1 | 32,1 |
| A1-3 | Gew.-Teile | 11,7 | 11,7 | 11,7 |
| A1-6 | Gew.-Teile | 5,0 | 5,0 | |
| A1-7 | Gew.-Teile | | | 5,0 |
| A2-1 | Gew.-Teile | 11,2 | 11,2 | 12,2 |
| A3-1 | Gew.-Teile | 7,2 | 7,2 | 7,2 |
| A5-3 | Gew.-Teile | 15,0 | 15,0 | 15,0 |
| A5-5 | Gew.-Teile | 5,0 | 5,0 | 5,0 |
| A5-9 | Gew.-Teile | 25,0 | 25,0 | 25,0 |
| A5-10 | Gew.-Teile | 2,0 | | 2,0 |

(fortgesetzt)

| Beispiele | | 10 | 11 | 12 |
|---|---|---|---|---|
| A5-11 | Gew.-Teile | | 2,0 | |
| B-1 | Gew.-Teile | 122,0 | 122,0 | 147,1 |
| Kennzahl | | 320 | 320 | 320 |
| **Eigenschaften** | | | | |
| Startzeit | s | 30 | 30 | 30 |
| Abbindezeit | s | 240 | 180 | 180 |
| Steigzeit | s | 120 | 120 | 110 |
| Rohdichte aus dem Kern des Formteils | kg/m³ | 42 | 42 | 42 |
| Offenzelligkeit | % | 9 | 8 | 10 |
| Druckfestigkeit in der schwächsten Richtung | MPa | 0,10 | 0,11 | 0,11 |
| Vertikale Flammenaus breitung | cm | 13 | 13 | 12 |
| MARHE | kW/m² | 75 | 69 | 62 |
| Wärmefreisetzung (Spitze)[1] | kW/m² | 118 | 113 | 100 |
| [1] Bei der Messung der Wärmefreisetzung über 600 Sekunden nach der ISO-Norm 5660-1 (März 2015) höchste gemessene Wert der Wärmefreisetzung. | | | | |

Tabelle 3 zeigt, dass PUR-/PIR-Hartschaumstoffe enthaltend isocyanatreaktive Komponenten hergestellt mit biobasierten Ausgangsstoffen mit dem erfindungsgemäßen Flammschutzmittel ebenfalls gute Flammschutzeigenschaften aufweisen.

**Tabelle 4:**

| Beispiele | | 13* | 14 |
|---|---|---|---|
| A1-1 | Gew.-Teile | 64 | 64 |
| A1-4 | Gew.-Teile | 5 | 5 |
| A2-1 | Gew.-Teile | 15 | 15 |
| A3-1 | Gew.-Teile | 7 | 7 |
| A4-1 | Gew.-Teile | 4 | 4 |
| A5-1 | Gew.-Teile | 5 | 5 |
| A5-2 | Gew.-Teile | | 15 |
| A5-5 | Gew.-Teile | | 5 |
| A5-12 | Gew.-Teile | 20 | |
| B-1 | Gew.-Teile | 173 | 173 |
| Kennzahl | | 320 | 320 |
| **Eigenschaften** | | | |
| Chlorgehalt aus Flammschutzmittel in A+B | Gew.-% | 2,2 | |
| Startzeit | s | 18 | 20 |
| Steigzeit | s | 40 | 45 |
| Rohdichte aus dem Kern des Formteils | kg/m³ | 40 | 38 |
| Offenzelligkeit | % | 18 | 8 |
| Parallel zur Steigrichtung | MPa | 0,15 | 0,33 |
| Senkrecht zur Steigrichtung | MPa | 0,10 | 0,11 |

(fortgesetzt)

| Eigenschaften | | | |
|---|---|---|---|
| Vertikale Flammausbreitung | cm | 8 | 9 |
| MARHE | kW/m$^2$ | 26 | 29 |
| Wärmefreisetzung (Spitze) [1] | kW/m$^2$ | 132 | 138 |
| * Vergleichsbeispiel<br>[1] Bei der Messung der Wärmefreisetzung über 600 Sekunden nach der ISO-Norm 5660-1 (März 2015) höchste gemessene Wert der Wärmefreisetzung. | | | |

Der Vergleich zwischen Beispiel 13, einer Formulierung mit einem halogenierten Flammschutzmittel, und Beispiel 14 zeigt, dass die Druckfestigkeit des PUR-/PIR-Hartschaumstoffs mit dem erfindungsgemäßen Flammschutzmittel gegenüber dem PUR-/PIR-Hartschaumstoff mit einem halogenierten Flammschutzmittel verbessert ist und gleichzeitig gute Flammschutzeigenschaften erhalten werden.

## Patentansprüche

1. Verfahren zur Herstellung von PUR-/PIR-Hartschaumstoffen durch die Umsetzung eines Reaktionsgemisches enthaltend

   **A1** eine Isocyanat-reaktive Komponente
   **A2** Treibmittel
   **A3** Katalysator
   **A4** gegebenenfalls Additiv
   **A5** Flammschutzmittel
   **B eine** Isocyanatkomponente,

   **dadurch gekennzeichnet, dass** das Flammschutzmittel **A5** ein Phosphinat gemäß der Formel (I) enthält

   $$M[(R)_2PO_2]_n \qquad (I),$$

   wobei

   R = jeweils für H, C1- bis C4-(Hydroxy-)Alkyl-Gruppe oder Benzyl-Gruppe steht,
   M = ein Element der Hauptgruppen 1 bis 3 ist, wobei Wasserstoff ausgenommen ist, und
   n = die Nummer der Hauptgruppe von M ist,
   und

   der Anteil des Phosphinats gemäß der Formel (I) 0,1 bis 15 Gew.-% beträgt, bezogen auf die Gesamtmasse der Komponenten **A1** bis **A5**,
   und
   dass keine halogenierten Kohlenwasserstoffe als Treibmittel eingesetzt werden, und
   dass das Flammschutzmittel **A5** kein halogenhaltiges Flammschutzmittel enthält, und
   dass das Verhältnis von NCO-Gruppen und der gegenüber Isocyanaten reaktiven Gruppen in der Reaktionsmischung eine Kennzahl (Index) von 250 bis 450 aufweist.

2. Verfahren nach Anspruch 1, **dadurch gekennzeichnet, dass** in der Isocyanat-reaktiven Komponente **A1** ein Polyesterpolyol enthalten ist.

3. Verfahren nach Anspruch 1, **dadurch gekennzeichnet, dass** in der Isocyanat-reaktiven Komponente **A1** ein Polyesterpolyol mit einem Äquivalentgewicht von 50 g/mol bis 2000 g/mol, bevorzugt 100 g/mol bis 1000 g/mol, besonders bevorzugt 200 g/mol bis 500 g/mol und ganz besonders bevorzugt 300 g/mol bis 450 g/mol enthalten ist.

4. Verfahren nach einem der vorhergehenden Ansprüche, **dadurch gekennzeichnet, dass** das Flammschutzmittel **A5** 1,0 Gew.-% bis 50,0 Gew.-%, bevorzugt 5,0 Gew.-% bis 40,0 Gew.-%, besonders bevorzugt 10,0 Gew.-% bis 30 Gew.-%, jeweils bezogen auf die Gesamtmasse des Flammschutzmittels **A5,** eines Phosphinats gemäß der Formel (I) enthält.

5. Verfahren nach einem der vorhergehenden Ansprüche, **dadurch gekennzeichnet, dass** der Anteil an Phosphinat gemäß der Formel (I) 0,5 Gew.-% bis 15,0 Gew.-%, besonders bevorzugt 1,0 Gew.-% bis 10,0 Gew.-%, jeweils bezogen auf die Gesamtmasse der Komponenten **A1** bis **A5,** beträgt.

6. Verfahren nach einem der vorhergehenden Ansprüche, **dadurch gekennzeichnet, dass** das Flammschutzmittel **A5** ein Phosphinat gemäß der Formel (I) enthält, wobei M ein Element aus der Hauptgruppe 1 oder 2 ist.

7. Verfahren nach einem der vorhergehenden Ansprüche, **dadurch gekennzeichnet, dass** das Flammschutzmittel **A5** ein Phosphinat gemäß der Formel (I) enthält, wobei M ausgewählt ist aus der Gruppe bestehend aus Natrium, Kalium, Magnesium, Calcium und Aluminium, bevorzugt Natrium, Magnesium und Aluminium, besonders bevorzugt Natrium und Aluminium.

8. Verfahren nach einem der vorhergehenden Ansprüche, **dadurch gekennzeichnet, dass** das Flammschutzmittel **A5** neben einem Phosphinat gemäß der Formel (I) ein Flammschutzmittel enthält welches ausgewählt ist aus der Gruppe bestehend aus Diphenylkresylphosphat, Triethylphosphat und Bisphenol-A-bis-(Diphenylphosphat).

9. Verfahren nach einem der vorhergehenden Ansprüche, **dadurch gekennzeichnet, dass** ein Phosphinat gemäß der Formel (I) enthaltend ist, wobei R ausgewählt ist aus der Gruppe bestehend aus Wasserstoff oder C1-C4-Alkylgruppe.

10. Verfahren nach einem der vorhergehenden Ansprüche, **dadurch gekennzeichnet, dass** das Flammschutzmittel **A5** ein Phosphinat gemäß der Formel (I) mit einem Partikeldurchmesser $d_{50}$ von weniger als 50,0 $\mu$m, bevorzugt weniger als 25,0 $\mu$m, besonders bevorzugt weniger als 10,0 $\mu$m und ganz besonders bevorzugt weniger als 5,0 $\mu$m enthält.

11. Verfahren nach einem der vorhergehenden Ansprüche, **dadurch gekennzeichnet, dass** die Isocyanatkomponente **B** ausgewählt ist aus mindestens einer Verbindung aus der Gruppe bestehend aus MDI, polymeres MDI und TDI.

12. PUR-/PIR-Hartschaumstoff, erhältlich nach dem Verfahren gemäß einem der Ansprüche 1 bis 11.

13. Verwendung von PUR-/PIR-Hartschaumstoffen nach Anspruch 12 zur Herstellung eines Isolationsmaterials.

**Claims**

1. Process for producing rigid PUR/PIR foams by reaction of a reaction mixture containing

   **A1** an isocyanate-reactive component
   **A2** blowing agent
   **A3** catalyst
   **A4** optionally additive
   **A5** flame retardant
   **B** an isocyanate component,

   **characterized in that** the flame retardant A5 contains a phosphinate of formula (I)

   $$M[(R)_2PO_2]_n \qquad (I),$$

   wherein

   R represents at each occurrence H, C1- to C4-(hydroxy)alkyl or benzyl,
   M is an element from main groups 1 to 3, with the exception of hydrogen, and
   n is the number of the main group of M,

   and

the proportion of the phosphinate of formula (I) is 0.1% to 15% by weight based on the total mass of components **A1** to **A5**,

halogenated hydrocarbons are not used as blowing agents,

and the flame retardant **A5** contains no halogen-containing flame retardant,

and the ratio of NCO groups and groups reactive towards isocyanates in the reaction mixture has an in isocyanate index (index) of 250 to 450.

2.  Process according to Claim 1, **characterized in that** the isocyanate-reactive component **A1** contains a polyester polyol.

3.  Process according to Claim 1, **characterized in that** the isocyanate-reactive component **A1** contains a polyester polyol having an equivalent weight of 50 g/mol to 2000 g/mol, preferably 100 g/mol to 1000 g/mol, particularly preferably 200 g/mol to 500 g/mol and very particularly preferably 300 g/mol to 450 g/mol.

4.  Process according to any of the preceding claims, **characterized in that** the flame retardant **A5** contains 1.0% by weight to 50.0% by weight, preferably 5.0% by weight to 40.0% by weight, particularly preferably 10.0% by weight to 30% by weight, in each case based on the total mass of the flame retardant **A5,** of a phosphinate of formula (I).

5.  Process according to any of the preceding claims, **characterized in that** the proportion of phosphinate of formula (I) is 0.5% by weight to 15.0% by weight, particularly preferably 1.0% by weight to 10.0% by weight, in each case based on the total mass of the components **A1** to **A5**.

6.  Process according to any of the preceding claims, **characterized in that** the flame retardant **A5** contains a phosphinate of formula (I), wherein M is an element from main group 1 or 2.

7.  Process according to any of the preceding claims, **characterized in that** the flame retardant **A5** contains a phosphinate of formula (I), wherein M is selected from the group consisting of sodium, potassium, magnesium, calcium and aluminum, preferably sodium, magnesium and aluminum, particularly preferably sodium and aluminum.

8.  Process according to any of the preceding claims, **characterized in that** in addition to a phosphinate of formula (I) the flame retardant **A5** contains a flame retardant selected from the group consisting of diphenylcresyl phosphate, triethyl phosphate and bisphenol A bis(diphenylphosphate).

9.  Process according to any of the preceding claims, **characterized in that** a phosphinate of formula (I), wherein R is selected from the group consisting of hydrogen or C1-C4-alkyl, is present.

10. Process according to any of the preceding claims, **characterized in that** the flame retardant **A5** contains a phosphinate of formula (I) having a particle diameter $d_{50}$ of less than 50.0 $\mu$m, preferably less than 25.0 $\mu$m, particularly preferably less than 10.0 $\mu$m and very particularly preferably less than 5.0 $\mu$m.

11. Process according to any of the preceding claims, **characterized in that** the isocyanate component **B** is selected from at least one compound from the group consisting of MDI, polymeric MDI and TDI.

12. Rigid PUR/PIR foam obtainable by the process according to any of Claims 1 to 11.

13. Use of rigid PUR/PIR foams according to Claim 12 for producing an insulation material.

**Revendications**

1.  Procédé pour la préparation de mousses dures de PUR/PIR, par la transformation d'un mélange réactionnel contenant

    **A1** un composant réactif vis-à-vis d'isocyanate
    **A2** un agent gonflant
    **A3** un catalyseur
    **A4** le cas échéant un additif
    **A5** un agent ignifuge

**B** un composant isocyanate,
**caractérisé en ce que** l'agent ignifuge A5 contient un phosphinate selon la formule (I)

$$M[(R)_2PO_2]_n \qquad (I),$$

dans laquelle

R = représente à chaque fois H, un groupe C1-C4-(hydroxy-)alkyle ou un groupe benzyle,
M = représente un élément des groupes principaux 1 à 3, l'hydrogène étant exclu, et
n = représente le numéro du groupe principal de M,
et la proportion du phosphinate selon la formule (I) est de 0,1 à 15% en poids, par rapport à la masse totale des composants **A1** à **A5,**
et les hydrocarbures halogénés ne sont pas utilisés comme agents gonflants,
et l'agent ignifuge **A5** ne contient pas d'agent ignifuge halogéné,
et le rapport des groupes NCO et des groupes réactifs aux isocyanates dans le mélange réactionnel a un indice d'isocyanate (indice) de 250 à 450.

2. Procédé selon la revendication 1, **caractérisé en ce qu'**un polyester-polyol est contenu dans le composant réactif vis-à-vis d'isocyanate **A1.**

3. Procédé selon la revendication 1, **caractérisé en ce qu'**un polyester-polyol présentant un poids équivalent de 50 g/mole à 2000 g/mole, de préférence de 100 g/mole à 1000 g/mole, de manière particulièrement préférée de 200 g/mole à 500 g/mole et de manière tout particulièrement préférée de 300 g/mole à 450 g/mole est contenu dans le composant réactif vis-à-vis d'isocyanate **A1**.

4. Procédé selon l'une quelconque des revendications précédentes, **caractérisé en ce que** l'agent ignifuge **A5** contient 1,0% en poids à 50,0% en poids, de préférence 5,0% en poids à 40,0% en poids, de manière particulièrement préférée 10,0% en poids à 30% en poids, à chaque fois par rapport à la masse totale de l'agent ignifuge **A5,** d'un phosphinate selon la formule (I).

5. Procédé selon l'une quelconque des revendications précédentes, **caractérisé en ce que** la proportion de phosphinate selon la formule (I) est de 0,5% en poids à 15,0% en poids, de manière particulièrement préférée de 1,0% en poids à 10,0% en poids, à chaque fois par rapport à la masse totale des composants **A1** à **A5.**

6. Procédé selon l'une quelconque des revendications précédentes, **caractérisé en ce que** l'agent ignifuge **A5** contient phosphinate selon la formule (I), M étant un élément du groupe principal 1 ou 2.

7. Procédé selon l'une quelconque des revendications précédentes, **caractérisé en ce que** l'agent ignifuge **A5** contient un phosphinate selon la formule (I), M étant choisi dans le groupe constitué par le sodium, le potassium, le magnésium, le calcium et l'aluminium, de préférence le sodium, le magnésium et l'aluminium, de manière particulièrement préférée le sodium et l'aluminium.

8. Procédé selon l'une quelconque des revendications précédentes, **caractérisé en ce que** l'agent ignifuge **A5** contient, outre un phosphinate selon la formule (I), un agent ignifuge qui est choisi dans le groupe constitué par le phosphate de diphénylcrésyle, le phosphate de triéthyle et le bisphénol-A-bis-(phosphate de diphényle) .

9. Procédé selon l'une quelconque des revendications précédentes, **caractérisé en ce qu'**un phosphinate selon la formule (I) est contenu, R étant choisi dans le groupe constitué par l'hydrogène ou un groupe C1-C4-alkyle.

10. Procédé selon l'une quelconque des revendications précédentes, **caractérisé en ce que** l'agent ignifuge **A5** contient un phosphinate selon la formule (I) présentant un diamètre de particule $d_{50}$ inférieur à 50,0 $\mu$m, de préférence inférieur à 25,0 $\mu$m, de manière particulièrement préférée inférieur à 10,0 $\mu$m et de manière tout particulièrement préférée inférieur à 5,0 $\mu$m.

11. Procédé selon l'une quelconque des revendications précédentes, **caractérisé en ce que** le composant isocyanate **B** est choisi parmi au moins un composé du groupe constitué par le MDI, le MDI polymère et le TDI.

12. Mousse dure de PUR/PIR pouvant être obtenue selon le procédé selon l'une quelconque des revendications 1 à 11.

13. Utilisation de mousses dures de PUR/PIR selon la revendication 12 pour la fabrication d'un matériau d'isolation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4418307 A1
- US 5268393 A
- WO 2006108833 A1
- EP 1142940 A2
- US 2014066532 A1
- US 5470891 A
- CN 105505171 A
- CN 105131578 A
- EP 0069975 A1
- CN 105330818 B
- EP 2910585 A1
- EP 1359177 A1
- WO 2010043624 A
- EP 1923417 A
- US 2764565 A

**In der Beschreibung aufgeführte Nicht-Patentliteratur**

- **G.W. BECKER** ; **D. BRAUN**. Polyurethane. Carl Hanser Verlag, 1983, vol. 2, 1-5
- Recent Advances on the Utilization of Nanoclays and Organophosphorus Compounds in Polyurethane Foams for Increasing Flame Retardancy. **J.C. QUAGLIANO** ; **V.M. WITTEMBERG** ; **I.C.G. GARCIA**. Structural Nanocomposites, Engineering Materials. Springer Verlag, 2013, vol. 1, 249-258
- **S.V. LEVCHIK** ; **E.D. WEIL**. A Review of Recent Progress in Phosphorus-based Flame Retardants. *J. Fire Sci.*, 2006, vol. 24, 345-364
- **L. CHEN** ; **Y.-Z. WANG**. A review on flame retardant technology in China. Part 1: development of flame retardants. *Polym. Adv. Technol.*, 2010, vol. 21, 1-26
- **H. LI** ; **N. NING** ; **L. ZHANG** ; **Y. WANG** ; **W. LIANG** ; **M. TIAN**. Different flame retardancy effects and mechanisms of aluminium phosphinate in PPO. *TPU and PP, Polym. Degrad. Stab*, 2014, vol. 105, 86-95
- Kunststoff-Handbuch. Carl Hanser Verlag, 1993, 267
- Polyurethan Taschenbuch. Carl Hanser Verlag, 2001, vol. 2, 83-102